(19) **Europäisches Patentamt / European Patent Office / Office européen des brevets**

(11) **EP 4 604 221 A1**

(12) **EUROPEAN PATENT APPLICATION**
published in accordance with Art. 153(4) EPC

(43) Date of publication:
**20.08.2025 Bulletin 2025/34**

(21) Application number: **23877142.2**

(22) Date of filing: **26.09.2023**

(51) International Patent Classification (IPC):
**H01M 4/66** $^{(2006.01)}$     **H01M 4/06** $^{(2006.01)}$

(52) Cooperative Patent Classification (CPC):
**H01M 4/06; H01M 4/64; H01M 4/66;** Y02E 60/10

(86) International application number:
**PCT/JP2023/034962**

(87) International publication number:
**WO 2024/080136 (18.04.2024 Gazette 2024/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.10.2022 JP 2022164282**

(71) Applicant: **Toyo Kohan Co., Ltd.
Tokyo 141-8260 (JP)**

(72) Inventors:
- **KAWAMURA, Michio**
  **Kudamatsu-shi, Yamaguchi 744-8611 (JP)**
- **HARADA, Satoko**
  **Kudamatsu-shi, Yamaguchi 744-8611 (JP)**
- **MIZOGUCHI, Saeko**
  **Kudamatsu-shi, Yamaguchi 744-8611 (JP)**
- **HORIE, Shinichirou**
  **Kudamatsu-shi, Yamaguchi 744-8611 (JP)**
- **MATSUSHIGE, Daisuke**
  **Kudamatsu-shi, Yamaguchi 744-8611 (JP)**

(74) Representative: **Kraus & Lederer PartGmbB
Thomas-Wimmer-Ring 15
80539 München (DE)**

(54) **SURFACE-TREATED METAL SHEET FOR BATTERY**

(57)     Provided is a surface-treated metal sheet for batteries, comprising a metal base material, a nickel layer formed on at least one side of the metal base material, and a tin layer formed as an overlay on the nickel layer, wherein with respect to the tin layer, at least one of the result of Formula (1) below and that of Formula (2) below exceeds 1:

$$N(220)/N(200) > \quad (1)$$

$$N(220)/N(400) > \quad (2)$$

where in Formulae (1) and (2), N(220) represents an index of crystal orientation in a (220) plane in the tin layer, in Formula (1), N(200) represents an index of crystal orientation in a (200) plane in the tin layer, and in Formula (2), N(400) represents an index of crystal orientation in a (400) plane in the tin layer.

Fig. 1

EP 4 604 221 A1

**Description**

TECHNICAL FIELD

The present invention relates to a surface-treated metal sheet for batteries having an excellent gas generation-suppressing effect.

BACKGROUND ART

There are practically used and well-known types of secondary batteries including an aqueous alkaline solution as an electrolyte solution, so-called alkaline batteries, including nickel-cadmium batteries, nickel-hydrogen batteries, and the like. Further, known as alkaline secondary batteries are air batteries as well as nickel-zinc batteries including nickel hydroxide or the like for a positive electrode and zinc or the like for a negative electrode active material and including an aqueous alkaline solution as an electrolyte solution.

One of the difficulties for practical applications of zinc-air batteries and nickel-zinc batteries as secondary batteries is a hydrogen gas-generation problem in the charge/discharge process (including self discharging). When hydrogen gas generation occurs and the amount of the produced gas exceeds a certain level, a decrease in battery performance and an increase in the internal pressure can occur, which can cause battery leakage. These problems can be especially remarkable in batteries in which zinc is involved in the battery reaction.

It is already known that the above-mentioned hydrogen gas-generation problem can be fixed by using materials having a high hydrogen overvoltage for a negative electrode current collector. For example, in Patent Document 1, it is intended that the hydrogen gas-generation problem as mentioned above should be fixed by using an alloy of copper and tin as a material for a current collector of a negative electrode to increase the hydrogen overvoltage.

BACKGROUND ART DOCUMENT

PATENT DOCUMENT

Patent Document 1: JP H2-75160 A

SUMMARY OF THE INVENTION

PROBLEMS TO BE SOLVED BY THE INVENTION

However, the technique described in Patent Document 1 produces an insufficient gas generation-suppressing effect when it is applied to practical alkaline secondary batteries. That is, to achieve sufficient battery performance as alkaline secondary batteries, it is preferred that the potassium hydroxide concentration in the electrolyte solution be 20% by weight or more, and a potassium hydroxide concentration of 25 to 40% by weight is desired to achieve much higher performance. Thus, a material that has a more excellent gas generation-suppressing effect in the high-concentration electrolyte solution as described above is desired.

In view of the above-described problems, the present inventors have made intensive investigations to develop a surface-treated metal sheet for batteries that has a more excellent gas generation-suppressing effect in the charge/-discharge process of alkaline secondary batteries, and that can be used as a material for a current collector of a negative electrode, a material for a battery tab/lead, or a battery container (a battery exterior material). As a result, the present inventors have found that a surface-treated metal sheet for batteries having a specific construction can solve the above-described problems, and consequently have made the present invention.

MEANS FOR SOLVING THE PROBLEMS

The present inventors have made intensive investigations to accomplish the above-described object. As a result, the present inventors have found that a surface-treated metal sheet for batteries comprising a metal base material, a nickel layer formed on at least one side of the metal base material, and a tin layer formed as an overlay on the nickel layer can accomplish the above-described object, and have made the present invention.

[1] Mode 1 of the present invention is a surface-treated metal sheet for batteries, comprising a metal base material, a nickel layer formed on at least one side of the metal base material, and a tin layer formed as an overlay on the nickel layer, wherein with respect to the tin layer, at least one of the result of Formula (1) below and that of Formula (2) below exceeds 1:

$$N(220)/N(200) \quad (1)$$

$$N(220)/N(400) \quad (2)$$

where in Formulae (1) and (2), N(220) represents an index of crystal orientation in a (220) plane in the tin layer, in Formula (1), N(200) represents an index of crystal orientation in a (200) plane in the tin layer, and in Formula (2), N(400) represents an index of crystal orientation in a (400) plane in the tin layer.

[2] Mode 2 of the present invention is the surface-treated metal sheet for batteries according to Mode 1, further comprising a nickel-tin alloy layer formed between the nickel layer and the tin layer.

[3] Mode 3 of the present invention is the surface-treated metal sheet for batteries according to Mode 1 or 2, wherein the metal base material is an iron-based metal base material.

[4] Mode 4 of the present invention is the surface-treated metal sheet for batteries according to any one of Modes 1 to 3, wherein the deposited amount of nickel in the nickel layer is more than 1.0 g/m$^2$ and 20.0 g/m$^2$ or less.

[5] Mode 5 of the present invention is the surface-treated metal sheet for batteries according to any one of Modes 1 to 4, wherein the deposited amount of tin in the tin layer is 1.0 g/m$^2$ or more and 15.0 g/m$^2$ or less.

[6] Mode 6 of the present invention is the surface-treated metal sheet for batteries according to any one of Modes 1 to 5, wherein at least one of the result of Formula (1) and that of Formula (2) is 2 or more.

[7] Mode 7 of the present invention is the surface-treated metal sheet for batteries according to Mode 2, wherein the nickel-tin alloy layer contains an alloy phase that gives a diffraction peak in the region of diffraction angle $2\theta = 42$ to $43°$ as measured by X-ray diffraction measurement using CuK$\alpha$ as an X-ray source.

EFFECTS OF THE INVENTION

According to the present invention, a surface-treated metal sheet for batteries having an excellent gas generation-suppressing effect can be provided.

BRIEF DESCRIPTION OF DRAWINGS

Fig. 1 is a cross-sectional view of a surface-treated metal sheet for batteries according to an embodiment of the present invention.
Fig. 2 is a cross-sectional view of a surface-treated metal sheet for batteries according to another embodiment of the present invention.
Fig. 3A is an X-ray diffraction (XRD) chart showing a diffraction peak of (200) plane in a tin layer.
Fig. 3B is an X-ray diffraction (XRD) chart showing a diffraction peak of (220) plane in the tin layer.
Fig. 3C is an X-ray diffraction (XRD) chart showing a diffraction peak of (400) plane in the tin layer.
Fig. 4 is an X-ray diffraction chart of an alloy phase contained in a nickel-tin alloy layer.

DESCRIPTION OF EMBODIMENTS

The surface-treated metal sheet for batteries according to the present invention is a surface-treated metal sheet used in battery application, and is used, for example, in applications as current collectors for a positive electrode or a negative electrode, applications as battery containers for accommodating electric power-generating elements of a battery, or the like. Examples of the batteries include, but are not limited to, aqueous batteries including an alkaline electrolyte solution, such as nickel-cadmium batteries, nickel-hydrogen batteries, zinc-air batteries, and nickel-zinc batteries, non-aqueous batteries such as lithium-ion batteries, and the like. The surface-treated metal sheet for batteries according to the present invention is preferably used in aqueous batteries, in which the surface-treated metal sheet for batteries is particularly preferably used in applications as current collectors and in applications as battery containers for constructing aqueous batteries in which zinc is involved in the battery reaction (e.g., nickel-zinc batteries). In addition, the present invention is applicable to both primary batteries and secondary batteries as long as they are aqueous batteries.

Hereinafter, one embodiment according to the present invention will be described with reference to the accompanying drawings.

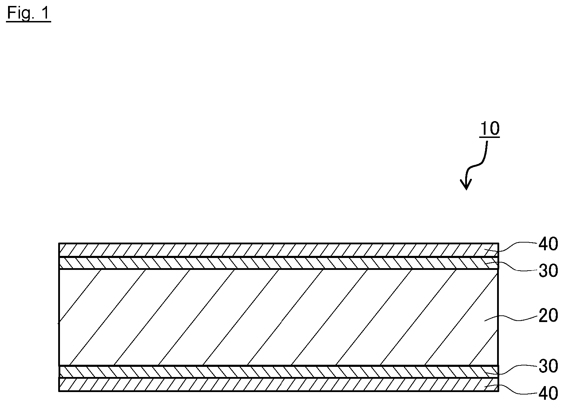

Fig. 1 is a cross-sectional view of a surface-treated metal sheet for batteries 10 according to an embodiment of the present invention. The surface-treated metal sheet for batteries 10 according to the present embodiment comprises nickel layers 30 formed on both sides of a metal base material 20, and tin layers 40 formed as overlays on the nickel layers 30 as shown in Fig. 1.

Although Fig. 1 shows an exemplary construction including nickel layers 30 and tin layers 40 formed on both sides of a metal base material 20, in the present embodiment, it is sufficient that the nickel layer 30 and the tin layer 40 are formed on at least one side of the metal base material 20, and the construction is not particularly limited to those including the nickel layers 30 and the tin layers 40 formed on both sides of the metal base material 20. In addition, in the present invention, it is sufficient that the nickel layer 30 and the tin layer 40 are formed on the side where suppression of gas generation is required. For example, when the surface-treated metal sheet for batteries 10 according to the present embodiment is used in applications as a current collector for a positive electrode or a negative electrode (e.g., when used in applications as a current collector of a negative electrode of a nickel-zinc battery) or used as a material for leads or a material for tubs, a construction including nickel layers 30 and tin layers 40 formed on both sides of the metal base material 20 is possible. In addition, when the surface-treated metal sheet for batteries 10 according to the present embodiment is used in applications as battery containers such as a container or an electrode can, a construction including a nickel layer 30 and a tin layer 40 formed on the side of the metal base material 20 corresponding to the inside surface of a battery is possible. In particular, when a battery has a construction in which the inside surface of the battery is subjected to a negative electrode potential, a construction including a nickel layer 30 and a tin layer 40 formed on the inside surface is desirable. On the other hand, the side thereof corresponding to the outside surface of the battery is not particularly limited, but can be a surface with no surface treatment.

<Metal base material 20>

As the metal base material 20, an iron-based metal sheet is preferably used. Specifically, a steel sheet of low carbon steel (carbon content: 0.01 to 0.15% by weight), ultra-low carbon steel having a carbon content of 0.003% by weight or less, and non-ageing ultra-low carbon steel formed by adding Ti, Nb, or the like to ultra-low carbon steel can be used, for example, but the iron-based metal sheet is not particularly limited. Among these, low carbon steel and ultra-low carbon steel can be preferably used. Furthermore, examples of the metal base material 20 include an electrolytic foil formed of pure iron (an electrolytic foil with an iron content of 99.9% by weight or more). On the other hand, when the surface-treated metal sheet for batteries 10 according to the present embodiment is used in applications as a current collector of a positive electrode or a negative electrode, the metal base material 20 may be a perforated sheet or a perforated foil having perforations.

The thickness of the metal base material 20 is not particularly limited, but is, for example, preferably 0.005 to 2.0 mm, more preferably 0.01 to 0.8 mm, even more preferably 0.025 to 0.8 mm, particularly preferably 0.025 to 0.3 mm, when the surface-treated metal sheet for batteries 10 is used in applications as current collectors. On the other hand, when the surface-treated metal sheet for batteries 10 is used in applications as battery containers, the thickness is preferably 0.1 to 2.0 mm, more preferably 0.15 to 0.8 mm, even more preferably 0.15 to 0.5 mm. Examples of the method for measuring the thickness of the metal base material 20 include, but are not limited to, thickness measurement using a micrometer.

<Nickel layer 30>

The surface-treated metal sheet for batteries 10 according to the present embodiment comprises nickel layers 30 formed on both sides of the metal base material 20 as shown in Fig. 1. Although the nickel layers 30 are formed on both sides of the metal base material 20 in the present embodiment, the present invention is not limited to such a construction. It is sufficient that the nickel layer 30 is formed on at least one side of the metal base material 20. The presence or absence of the nickel layer 30 can be confirmed by X-ray diffraction (XRD) measurement using $CuK\alpha$ as an X-ray source.

The deposited amount of nickel in the nickel layer 30 is preferably more than $0.5 \, g/m^2$ and $20.0 \, g/m^2$ or less, more preferably more than $1.0 \, g/m^2$ and $15.0 \, g/m^2$ or less, even more preferably more than $2.0 \, g/m^2$ and $10.0 \, g/m^2$ or less, particularly preferably more than $3.0 \, g/m^2$ and $10.0 \, g/m^2$ or less. The deposited amount of nickel in a surface-treated metal sheet for batteries 10 can be determined by an X-ray fluorescent measurement or ICP optical emission spectrometry. The deposited amount of nickel described above refers to the amount of nickel deposited on one side of the metal base material 20.

The thickness of the nickel layer 30 is preferably 0.05 to 2.00 $\mu$m, more preferably 0.10 to 1.50 $\mu$m, even more preferably 0.20 to 1.20 $\mu$m, particularly preferably 0.30 to 1.00 $\mu$m. The thickness of the nickel layer 30 can be determined by calculating the thickness from the deposited amount of nickel as determined above and the density of nickel ($g/m^3$) (dividing the deposited amount of nickel by the density), but the method of thickness determination is not limited thereto. The thickness can be determined by measurement of thickness by cross-sectional observation using a scanning electron microscope (SEM), measurement of thickness using a transmission electron microscope (TEM), measurement using a radio frequency glow discharge optical emission spectrometer, or the like.

The method for forming the nickel layer 30 is not particularly limited, but a method of applying nickel plating onto the metal base material 20 using a nickel-plating bath is preferred. Examples of the plating bath that can be used include plating baths usually used for nickel plating, such as a Watt bath, a sulfamate bath, a fluoborate bath, and a chloride bath. For example, the nickel layer can be formed by using, as a Watt bath, a bath having a bath composition of 200 to 350 g/L nickel sulfate, 20 to 60 g/L nickel chloride, and 10 to 50 g/L boric acid, at a pH of 3.0 to 4.8 (preferably a pH of 3.6 to 4.6) and a bath temperature of 50 to 70°C and under conditions in which the current density is 10 to 40 A/dm$^2$ (preferably 20 to 30 A/dm$^2$). The nickel plating can be gloss nickel plating or semigloss nickel plating formed by adding additives such as a known brightener to the plating bath.

<Tin layer 40>

The surface-treated metal sheet for batteries 10 according to the present embodiment comprises tin layers 40 formed as overlays on the nickel layers 30 as shown in Fig. 1. The tin layers 40 can be formed by applying tin plating onto the nickel layers 30. The presence or absence of the tin layer 40 can be confirmed by X-ray diffraction (XRD) measurement using CuK$\alpha$ as an X-ray source as in the nickel layer 30 described above.

In the tin layer 40, at least one of the result of Formula (1) below and that of Formula (2) below, which relate to indices of crystal orientations in a (220) plane, a (200) plane, and a (400) plane, exceeds 1. Preferably, both of the result of Formula (1) and that of Formula (2) exceed 1.

$$N(220)/N(200) \quad (1)$$

$$N(220)/N(400) \quad (2)$$

In Formulae (1) and (2), N(220) represents an index of crystal orientation in a (220) plane in the tin layer 40, in Formula (1), N(200) represents an index of crystal orientation in a (200) plane in the tin layer 40, and in Formula (2), N(400) represents an index of crystal orientation in a (400) plane in the tin layer 40.

The indices of crystal orientations in the (220) plane, the (200) plane, and the (400) plane in the tin layer 40 are not particularly limited as long as at least one of the result of Formula (1) and that of Formula (2) exceeds 1. However, to further improve the gas generation-suppressing effect, at least one of the result of Formula (1) and that of Formula (2) is preferably 2 or more, more preferably 5 or more, further more preferably 10 or more. To further remarkably improve the gas generation-suppressing effect, both of the result of Formula (1) and that of Formula (2) are preferably 2 or more, more preferably 5 or more, still more preferably 10 or more. The upper limit of the result of Formula (1) or that of Formula (2) is usually 300 or less, preferably 200 or less, but not particularly limited thereto.

Formula (1) (N(220)/N(200)) represents the ratio of indices of crystal orientations in the (220) plane in the tin layer 40 and the (200) plane in the tin layer 40. Formula (2) (N(220)/N(400)) represents the ratio of indices of crystal orientations in the (220) plane in the tin layer 40 and the (400) plane in the tin layer 40.

The index of crystal orientation (N(220)) in the (220) plane in the tin layer 40 can be determined by the following method. That is, the intensity of refracted rays in each crystal plane on the surface of the tin layer 40 is measured using an X-ray diffractometer, and then calculating the index based on the diffraction peak of tin found in the measurement and the diffraction peak of a reference tin powder according to a method of Willson and Rogers (the method described in K. S. Willson and J. A. Rogers; Tech. Proceeding Amer. Electroplaters Soc., 51, 92(1964)) as follows.

$$N(220) = IF(220)/IFR(220)$$

In the formula, IF(220) represents a fraction of the intensities of refracted X-rays from (220) plane, and IFR(220) represents a theoretical fraction of the intensities of refracted X-rays of the reference tin powder. IF(220) and IFR(220) each can be calculated as follows.

IF(220) = I(220)/[I(200) + I(101) + I(220) + I(301) + I(112) + I(400) + I(321) + I(420) + I(411) + I(312) + I(501)] IFR(220) = IR(220)/[IR(200) + IR(101) + IR(220) + IR(301) + IR(112) + IR(400) + IR(321) + IR(420) + IR(411) + IR(312) + IR(501)]

In the formulae, I(hkl) represents the intensity of refracted X-ray from (hkl) plane, and IR(hkl) represents the intensity of refracted X-ray from (hkl) plane in the reference tin powder shown in 00-004-0673 in a database ICDD PDF-2 2014 (h, k, and l each represent an integer of 0 to 5). The diffraction angle in each crystal plane of tin used in the calculation is as shown in the database.

The index of crystal orientation (N(200)) in the (200) plane and the index of crystal orientation (N(400)) in the (400) plane in the tin layer 40 can be calculated in the same manner as in the index of crystal orientation in the (220) plane. That is, the index of crystal orientation in the (200) plane and the index of crystal orientation in the (400) plane can be calculated according to the following formulae.

$$N(200) = IF(200)/IFR(200)$$

$$N(400) = IF(400)/IFR(400)$$

In the present embodiment, the reasons why having the above-described construction is desirable are as follows.

That is, as described above, there is a hydrogen-gas generation problem as a difficulty for practical applications of alkaline secondary batteries. Hydrogen gas is generated after satisfaction of a reaction condition for generating hydrogen gas under conditions that allow a chemical reaction (self-discharge) other than battery reactions due to the formation of a local cell between different metals in the battery. For example, in nickel-zinc batteries, zinc or zinc oxide is present during charging, and the zinc dissolves during discharging. Since among the metals used in aqueous batteries, zinc is one of the metals that have lower potentials, large amounts of discharge occur when it forms a local cell with a different metal used in the battery. Thus, the condition for hydrogen gas generation can be easily satisfied.

Generation of large amounts of hydrogen gas leads to problems of a decrease in battery performance and battery-leakage. Specifically, when hydrogen gas generation due to self-discharge occurs, electrons that should contribute to battery reactions are consumed for generating the hydrogen gas, which leads to a decrease in battery performance. Thus, as the amount of the generated hydrogen gas increases, the battery performance further decreases. In addition, there is a possibility of battery leakage due to an increase in the internal pressure, which leads to low safety. It should be noted that self-discharge as used herein includes both side reactions in the charge/discharge process (chemical reactions including hydrogen gas-generation process) and chemical reactions except for those in the charge/discharge process, that is, chemical reactions that occur under natural resting conditions.

In order to avoid these decreases in battery performance and battery-leakage problem, the amount of hydrogen gas generation should be suppressed as much as possible. In particular, since zinc or the like in the electrolyte solution deposits on the surface of the current collector and the deposit comes into contact with the materials of the current collector directly, the current collector is a member where hydrogen gas can be more easily generated and self-discharge can easily occur. As a method for reducing the hydrogen gas generation, a method of using a material having a high hydrogen overvoltage is known. In the present embodiment, tin (Sn) in the tin layer 40 can be considered as a material having a high hydrogen overvoltage. However, it is confirmed that when tin (Sn), which has a high hydrogen overvoltage, is used, the magnitude of the hydrogen gas generation-suppressing effect varies according to the state of crystal orientation in the tin layer.

Thus, the present inventors have made intensive study to develop a material having a more excellent hydrogen gas generation-suppressing effect as described above. As a result of repeated experiments, the present inventors have found that an excellent hydrogen gas generation-suppressing effect can be achieved by controlling the indices of crystal orientations in the (220) plane, the (200) plane, and the (400) plane in the tin layer 40 such that at least one of the result of Formula (1) and that of Formula (2) exceeds 1. To be noted, since the tin layer 40 is formed as an overlay on the nickel layer 30, the index of crystal orientation in the tin layer 40 can be easily controlled. In addition, when dissolution of part of the tin layer 40 occurs due to a type of electrolyte solution used in alkaline secondary batteries, the dissolution of the metal base material 20 in the electrolyte solution can be suppressed by virtue of the nickel layer 30 formed thereon.

By controlling the indices of crystal orientations in the (200) plane, the (220) plane, and the (400) plane in the tin layer 40 such that at least one of the result of Formula (1) and that of Formula (2) exceeds 1, the uniformity of the tin plating included in the tin layer 40 can be improved, which leads to suppression of gas generation in the charge/discharge process. On the other hand, when the index of crystal orientation in the (200) plane or the (400) plane is large and none of Formula (1) and Formula (2) are satisfied, tin plating lacks uniformity, and a part of the nickel layer 30 tends to lack the tin layer 40 and be exposed, which leads to gas generation in the charge/discharge process.

The deposited amount of tin in the tin layer 40 is preferably 1.0 to 15.0 g/m$^2$, more preferably 2.0 to 15.0 g/m$^2$, still more preferably 2.0 to 13.0 g/m$^2$, particularly preferably 3.0 to 13.0 g/m$^2$. When the deposited amount of tin in the tin layer 40 is within the above-described ranges, the generation of gas in the charge/discharge process can be effectively suppressed. The deposited amount of tin in a surface-treated metal sheet for batteries 10 can be determined by an X-ray fluorescent measurement or ICP optical emission spectrometry. The deposited amount of tin described above refers to the amount of tin deposited on one side of the metal base material 20.

The lower limit of the thickness of the tin layer 40 is preferably 0.05 $\mu$m or more, more preferably 0.10 $\mu$m or more, still more preferably 0.20 $\mu$m or more, particularly preferably 0.50 $\mu$m or more. When the thickness of the tin layer 40 is too small, suitable control of the index of crystal orientation in the tin layer 40 tends to be impossible, which leads to remarkable gas generation. The upper limit of the thickness of the tin layer 40 is preferably, 2.0 $\mu$m or less, more preferably 1.5 $\mu$m or less, still more preferably 1.0 $\mu$m or less, but not particularly limited thereto. The thickness of the tin layer 40 can be determined by calculating the thickness from the deposited amount of tin as determined above and the density of tin (g/m$^3$) (dividing the deposited amount of tin by the density), but the method of thickness determination is not limited thereto. The thickness can be determined by measurement of thickness by cross-sectional observation using a scanning electron microscope (SEM), measurement of thickness using a transmission electron microscope (TEM), measurement using a radio frequency glow discharge optical emission spectrometer, and the like.

Examples of the method for controlling the indices of crystal orientations in the (220) plane, the (200) plane, and the (400) plane in the tin layer 40 such that at least one of the result of Formula (1) and that of Formula (2) exceeds 1 include, but are not limited to, a method of adding a trace amount of nickel to a tin-plating bath used for forming the tin layer 40, a method of adding an additive to a tin-plating bath, a method of controlling the thickness of the tin layer 40, a combination of these methods, and the like.

Examples of the tin-plating bath used for forming the tin layer 40 include baths, such as a ferrostan bath, an MSA bath, a halogen bath, and a sulfuric acid bath, further containing a trace amount of nickel and/or an additive as described above. Among these, a sulfuric acid bath is preferably used. Preferably, the bath has a bath composition of 10 to 60 g/L tin ions and 25 to 110 mL/L sulfuric acid and further contains a trace amount of nickel and/or an additive as described above. Particularly preferably, the bath has a bath composition of 10 to 60 g/L tin ions and 25 to 60 mL/L sulfuric acid and further contains a trace amount of nickel and/or an additive as described above.

The amount of nickel added in the method of adding a trace amount of nickel to a tin-plating bath is preferably 10 to 200 ppm by weight, more preferably 10 to 100 ppm by weight, particularly preferably 20 to 100 ppm by weight.

Examples of the additive added to the tin-plating bath include ethoxylated naphthol, ethoxylated naphtholsulfonic acid, and the like. Commercially available additives include Technistan TP Additive (available from Technic Japan Inc.), UTB 230R (available from ISHIHARA CHEMICAL Co., Ltd.), and the like. Among these, Technistan TP Additive (available from Technic Japan Inc.) is preferably used. The amount of the additive added to the tin-plating bath is preferably 10 to 100 mL/L, more preferably 40 to 100 mL/L.

In the plating conditions for forming the tin layer 40, the current density is preferably 1.0 to 30.0 A/dm$^2$, more preferably 2.0 to 15.0 A/dm$^2$, particularly preferably 4.0 to 15.0 A/dm$^2$. The temperature of the plating bath is preferably 25 to 60°C, more preferably 35 to 55°C.

<Nickel-tin alloy layer 50>

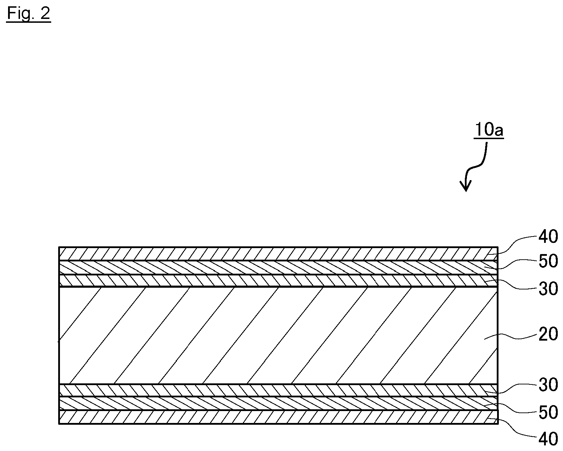

Fig. 2 is a cross-sectional view of a surface-treated metal sheet for batteries according to another embodiment of the present invention.

As shown in Fig. 2, the surface-treated metal sheet for batteries 10a according to the present embodiment may further comprise a nickel-tin alloy layer 50 between the nickel layer 30 and the tin layer 40 as described above. Even when dissolution of the tin layer 40 occurs after immersion into an electrolyte solution, the surface-treated metal sheet comprising a nickel-tin alloy layer 50 can be excellent in both suppression of gas generation and electrolyte resistance by virtue of the nickel-tin alloy layer 50.

The nickel-tin alloy layer 50 is not particularly limited, but preferably contains a nickel-tin alloy that gives a diffraction peak in the region of diffraction angle $2\theta$ = 42 to 43° as measured by X-ray diffraction measurement using CuK$\alpha$ as an X-ray source (hereinafter, this nickel-tin alloy is referred to as "Ni-Sn$_{42\text{-}43}$") as an alloy phase. By controlling the nickel-tin alloy layer 50 to contain Ni-Sn$_{42\text{-}43}$, the state of crystal orientation of tin in the tin layer 40 formed as an overlay on the nickel-tin alloy layer 50 can be easily maintained. Furthermore, the content of tin (Sn) on the surface of the nickel-tin alloy layer 50 can be increased, and the surface-treated metal sheet for batteries 10a can be excellent in both a gas generation-suppressing effect and electrolyte resistance. Note that it is confirmed that the diffraction peak in the region of diffraction angle $2\theta$ = 42 to 43° is different from the diffraction peaks of pure nickel, tin (Sn), and pure iron.

The thickness of the nickel-tin alloy layer 50 is not particularly limited, but is preferably 0.05 to 2.00 $\mu$m, more preferably 0.05 to 1.50 $\mu$m, still more preferably 0.10 to 1.00 $\mu$m. When the thickness of the nickel-tin alloy layer 50 is within the above-described ranges, the gas generation-suppressing effect and the electrolyte resistance can be further improved. The thickness of the nickel-tin alloy layer 50 can be determined by measurement of thickness by cross-sectional observation using a scanning electron microscope (SEM), measurement using a radio frequency glow discharge optical emission spectrometer, and the like.

In the surface-treated metal sheet for batteries 10a, the total amount of the deposited nickel contained in the nickel-tin alloy layer 50 and the deposited nickel contained in the nickel layer 30 is preferably more than 1.0 g/m$^2$ and 20.0 g/m$^2$ or less, more preferably more than 1.5 g/m$^2$ and 15.0 g/m$^2$ or less, further more preferably more than 2.0 g/m$^2$ and 10.0 g/m$^2$ or less, particularly preferably more than 3.0 g/m$^2$ and 10.0 g/m$^2$ or less. The total amount of the deposited tin contained in the nickel-tin alloy layer 50 and the deposited tin contained in the tin layer 40 is preferably 1.0 to 15.0 g/m$^2$,

more preferably 2.0 to 15.0 g/m$^2$, further more preferably 2.0 to 13.0 g/m$^2$, particularly preferably 3.0 to 13.0 g/m$^2$.

The ranges of the thickness of the nickel layer 30 and the thickness of the tin layer 40 in the surface-treated metal sheet for batteries 10a are as described in the surface-treated metal sheet for batteries 10.

The method for forming the nickel-tin alloy layer 50 is not particularly limited, but the nickel-tin alloy layer 50 can be formed such that diffusion at the interface between the nickel layer 30 and the tin layer 40 is allowed to occur by forming the nickel layer 30 on the metal base material 20 by the method described above, and then forming the tin layer 40 having controlled indices of crystal orientations in the (220) plane, the (200) plane, and the (400) plane. In particular, the nickel-tin alloy layer 50 can be formed by controlling at least one of the result of Formula (1) and that of Formula (2) to exceed 1.

Note that a room-temperature diffusion treatment is preferably used for further promoting the formation of the nickel-tin alloy layer 50. The temperature used in the room-temperature diffusion treatment can be, but is not particularly limited to, preferably 0°C or more and less than 50°C. The treatment time (duration of the treatment) can be preferably 5 days or more, more preferably 7 days or more, further more preferably 10 days or more, particularly preferably 30 days or more, but is not particularly limited thereto. The room-temperature diffusion treatment can cause the nickel-tin alloy layer 50 to contain primarily Ni-Sn$_{42-43}$ as an alloy phase.

The surface-treated metal sheets for batteries 10 and 10a according to the embodiments of the present invention can further comprise an iron-nickel diffusion layer as an underlying layer of the nickel layer 30. In the surface-treated metal sheet for batteries 10 having a construction as shown in Fig. 1, the construction comprising an iron-nickel diffusion layer in addition to the nickel layer 30 and the tin layer 40 can be obtained by forming the nickel layer 30 on the metal base material 20, forming the iron-nickel diffusion layer by a thermal treatment, and then forming the tin layer 40 as an overlay on the nickel layer 30. In the surface-treated metal sheet for batteries 10a having a construction as shown in Fig. 2, the construction comprising an iron-nickel diffusion layer in addition to the nickel layer 30, the nickel-tin alloy layer 50, and the tin layer 40 can be obtained by forming the nickel layer 30 on the metal base material 20, forming the iron-nickel diffusion layer by a thermal treatment, then forming the tin layer 40 as an overlay on the nickel layer 30, and further conducting a room-temperature diffusion treatment. Note that although a method for forming an iron-nickel diffusion layer by forming the tin layer 40 as an overlay on the nickel layer 30 and then forming the iron-nickel diffusion layer by a thermal treatment can be considered, this method is not preferred because it has a difficulty in controlling the state of crystal orientation in the tin layer 40 and cannot give a nickel-tin alloy layer 50 containing Ni-Sn$_{42-43}$. Thus, as described above, preferred are a method for obtaining the construction by forming the nickel layer 30, forming an iron-nickel diffusion layer by a thermal treatment, and then forming the tin layer 40 as an overlay on the nickel layer 30, and a method for obtaining the construction by forming an iron-nickel diffusion layer, then forming the tin layer 40 as an overlay on the nickel layer 30, and thereafter forming the nickel-tin alloy layer 50 between the tin layer 40 and the nickel layer 30.

The thermal treatment conditions for forming an iron-nickel diffusion layer is not particularly limited, but when the thermal treatment is conducted by box annealing, the thermal treatment temperature can be preferably more than 400°C and 600°C or less, more preferably 450°C or more and 600°C or less, and the soak time can be preferably 0.5 to 8 hours. When the thermal treatment is conducted by continuous annealing, the thermal treatment temperature can be preferably 600°C or more and 900°C or less, more preferably 600°C or more and 800°C or less, and the thermal treatment time can be preferably 3 to 120 seconds.

The surface-treated metal sheet for batteries 10 according to the present embodiment comprises a metal base material 20, a nickel layer 30 formed on at least one side of the metal base material 20, and a tin layer 40 formed as an overlay on the nickel layer 30, wherein in the indices of crystal orientations in the tin layer 40, at least one of the result of Formula (1) and that of Formula (2) exceeds 1, and the surface-treated metal sheet for batteries 10 according to the present embodiment can exert an excellent gas generation-suppressing effect. The surface-treated metal sheet for batteries 10a further comprising a nickel-tin alloy layer 50 between the nickel layer 30 and the tin layer 40 exerts both a gas generation-suppressing effect and electrolyte resistance. Thus, the surface-treated metal sheets for batteries 10 and 10a according to the embodiments of the present invention can be preferably used as a current collector of a positive electrode or a negative electrode and as a battery container by virtue of these properties. In particular, they can be further preferably used as a current collector and a battery container in alkaline secondary batteries using an alkaline electrolyte solution, and particularly preferably used as a current collector and a battery container in nickel-zinc batteries.

EXAMPLES

The present invention will be more specifically described by way of the following examples, but the present invention is not limited to the examples.

The methods for evaluating the properties are as follows.

<Measurement of deposited amount of nickel and deposited amount of tin>

The deposited amounts of nickel and the deposited amounts of tin in the surface-treated metal sheets 10 and 10a obtained in Examples and Comparative Examples were quantified using calibration curve method obtained by X-ray fluorescence (XRF) measurement. An X-ray fluorescence analyzer ZSX100e (available from Rigaku Corporation) was used. In the X-ray fluorescence measurement, it was confirmed that the metal elements contained in each of the nickel layer 30, the nickel-tin alloy layer 50, and the tin layer 40 of the surface-treated metal sheet can be quantified using the calibration curve method.

<X-ray diffraction (XRD) measurement (presence or absence of nickel layer 30 and tin layer 40)>

The presence or absence of the nickel layer 30 and the tin layer 40 was confirmed by X-ray diffraction (XRD) measurement performed on the surface-treated metal sheets for batteries 10 and 10a obtained in Examples and Comparative Examples. As an X-ray diffractometer, SmartLab (available from Rigaku Corporation) was used, and a 30 mm $\times$ 30 mm piece excised from the obtained surface-treated metal sheet for batteries was used as a test sample. Specific conditions for the X-ray diffraction (XRD) measurement were as follows:

(Equipment specifications)

· X-ray source: CuK$\alpha$
· Goniometer radius: 300 nm
· Optics: focusing method

(Slit system (X-ray source side))

· Soller slits: 5°
· Height limiting slit: 5 mm
· Divergence slit: 1/2°

(Slit system (detector side))

· Scattering slit: 1/2°
· Soller slits: 5°
· Receiving slit: 0.3 mm
· Monochromatization method: counter monochromator method
· Detector: Scintillation counter

(Parameters for measurement)

· Tube voltage-Tube current: 45 kV-200 mA
· Scan axis: $2\theta/\theta$
· Scan mode: continuous
· Data collection range: $2\theta$ range of 30 to 100°
· Scanning speed: 10°/n
· Step: 0.05°

Using integrated X-ray powder diffraction software PDXL (available from Rigaku Corporation), the background was eliminated from the peak intensity values thus obtained, and data analysis was performed. Whether a nickel layer 30 and a tin layer 40 were present or not was determined based on the presence or absence of the diffraction peaks of nickel and the diffraction peaks of tin, respectively. The peaks of nickel were determined based on a (200) plane peak found in the region of diffraction angle $2\theta$ = 51 to 53°, a (220) plane peak found in the region of diffraction angle $2\theta$ = 76 to 77°, and a (311) plane peak found in the region of diffraction angle $2\theta$ = 92 to 94° (ICDD-PDF card 03-065-2865). On the other hand, the peaks of tin were determined based on a (200) plane peak found in the region of diffraction angle $2\theta$ = 30 to 31°, a (220) plane peak found in the region of diffraction angle $2\theta$ = 43.5 to 44.1°, and a (400) plane peak found in the region of diffraction angle $2\theta$ = 63.5 to 64.2° (ICDD-PDF card 00-004-0673).

<X-ray diffraction (XRD) measurement (index of crystal orientation in tin layer 40)>

The surface-treated metal sheets for batteries 10 and 10a obtained in Examples and Comparative Examples were measured by X-ray diffraction (XRD) measurement as described above to obtain the intensity of refracted rays in each crystal plane of tin on the surface of the tin layer 40, then each of the indices of crystal orientations in the (220) plane, the (200) plane, and the (400) plane on the surface of the tin layer 40 was calculated using the resulting intensity of refracted rays of tin and the intensity of refracted rays of a reference tin powder, and the ratios of the indices of crystal orientations, N(220)/N(200) and N(220)/N(400), were calculated. The diffraction angle in each crystal plane of tin and the diffraction angle in each crystal plane of the reference tin powder used in the calculation were as shown in 00-004-0673 in a diffraction database ICDD PDF-2 2014.

<X-ray diffraction (XRD) measurement (presence or absence of nickel-tin alloy layer 50)>

The presence or absence of the nickel-tin alloy layer 50 was confirmed by X-ray diffraction (XRD) measurement as described above performed on the surface-treated metal sheets for batteries 10 and 10a obtained in Examples and Comparative Examples. In this method for confirming the presence or absence of the nickel-tin alloy layer 50, when a diffraction peak found in the region of diffraction angle $2\theta$ = 42 to 43°, which does not correspond to diffraction peaks of nickel, tin, and iron, was observed, the nickel-tin alloy layer 50 was determined to be present. Specifically, the diffraction peak found in the region of diffraction angle $2\theta$ = 42 to 43° does not correspond to any of the peaks at the diffraction angles shown in ICDD-PDF card 03-065-2865 (nickel), ICDD-PDF card 00-004-0673 (tin), and ICDD-PDF card 03-065-4899 (iron), and can be considered to be a diffraction peak derived from a nickel-tin alloy. Thus, when a diffraction peak was observed at such a diffraction angle, a nickel-tin alloy layer 50 was determined to be present.

<Evaluation of suppression of gas generation by corrosion current density measurement before anode reaction>

The surface-treated metal sheets for batteries 10 and 10a obtained in Examples and Comparative Examples were immersed in an alkaline solution, and then the corrosion current densities were measured to evaluate their gas generation-suppressing effects. The corrosion current density measurement was performed under the following conditions, and a corrosion current density (unit: $mA/cm^2$) generated between the test electrode and the counter electrode in a 30% by weight potassium hydroxide solution was measured.

· Measurement System: HZ7000 (made by HOKUTO DENKO)
· Test electrode: Zn sheet (evaluation area: 20 mm $\times$ 20 mm, thickness: 0.5 mm)
· Counter electrode: test sample (measurement diameter: $\varphi$6 mm)
· Method for measurement: Non-resistance ammeter

Specifically, as a test for mimicking a local cell with deposited Zn, the thus obtained surface-treated metal sheets for batteries 10 and 10a were immersed in an alkaline solution, and then the corrosion current densities were measured using an electrochemical measurement system and using a Zn sheet as a counter electrode to evaluate suppression of gas generation. As the corrosion current density after 30 seconds has passed from the immersion in the alkaline solution is lower, the effect of suppressing gas generation can be determined to be higher. In the evaluation, a corrosion current density of 0.15 $mA/cm^2$ or less was denoted by "A+", a corrosion current density of more than 0.15 $mA/cm^2$ and 0.20 $mA/cm^2$ or less was denoted by "A", a corrosion current density of more than 0.20 $mA/cm^2$ and 0.25 $mA/cm^2$ or less was denoted by "B", and a corrosion current density of more than 0.25 $mA/cm^2$ was denoted by "C".

<Evaluation of suppression of gas generation by corrosion current density measurement after anode reaction>

When an application of the obtained surface-treated metal sheets for batteries 10 and 10a to a zinc secondary battery is assumed, an increase in the thickness of the zinc layer of a negative electrode active material can occur due to repeated charge and discharge depending on the design of the battery. To reduce the excessively thickened zinc layer, it can be considered that a discharge reaction (anode reaction) is continued to a state close to an overdischarge state. As a test for mimicking such conditions, an anode reaction test was carried out using an alkaline solution (30% by weight potassium hydroxide solution), and corrosion current densities of the surface-treated metal sheets for batteries 10 and 10a after the anode reaction test were measured in the same manner as described above. In the evaluation, a corrosion current density of 20 $mA/cm^2$ or less was denoted by "A+", a corrosion current density of more than 20 $mA/cm^2$ and 30 $mA/cm^2$ or

less was denoted by "A", a corrosion current density of more than 30 mA/cm$^2$ and 40 mA/cm$^2$ or less was denoted by "B", and a corrosion current density of more than 40 mA/cm$^2$ was denoted by "C".

The anode reaction test was carried out under the following conditions:

· Electrochemical Measurement System: HZ7000 (made by HOKUTO DENKO CORP.)
· Test electrode: Test sample (evaluation area: 20 mm × 20 mm)
· Counter electrode: Cu plate
· Reference electrode: Ag/AgCl (saturated KCl)
· Electrolyte solution: 30% by weight potassium hydroxide solution
· Current density: 50 mA/cm$^2$
· Method for measurement: Chronopotentiometry
· Quantity of electric charge: 21 C/cm$^2$

<Example 1>

First, as a metal base material 20, a cold-rolled steel sheet (thickness: 60 μm) of a low-carbon aluminum-killed steel having the following chemical composition was prepared.

C: 0.04% by weight, Mn: 0.32% by weight, Si: 0.01% by weight, P: 0.012% by weight, S: 0.014% by weight, Remainder: Fe and inevitable impurities

Next, the thus prepared metal base material 20 was pickled by electrolytic degreasing and sulfuric acid immersion to form nickel layers 30 on both sides of the metal base material 20. The nickel plating was carried out under the following conditions. The treatment in the nickel plating was continued for a period such that the deposited amount of nickel was the amount shown in Table 1.

(Bath composition: Watt bath)

Nickel sulfate hexahydrate: 250 g/L
Nickel chloride hexahydrate: 45 g/L
Boric acid: 30 g/L

(Plating conditions)

Bath temperature: 60°C
pH: 4.0 to 5.0
Stirring: air stirring or jet stirring
Current density: 10 A/dm$^2$

Next, the metal base material 20 on which the nickel layers 30 were formed was subjected to tin plating to form tin layers 40 as overlays on the nickel layers 30 formed on both sides of the metal base material 20. The tin plating was carried out under the following conditions. The treatment in the tin plating was continued for a period such that the deposited amount of tin was the amount shown in Table 1 to afford a surface-treated metal sheet for batteries 10. Then, each of the above-described measurements was performed on the thus obtained surface-treated metal sheet for batteries 10. The results are shown in Table 1.

(Bath composition)

Tin ions: 20 g/L
Sulfuric acid: 45 mL/L
Additive (Product name: Technistan TP Additive (available from Technic Japan Inc.): 50 mL/L
Nickel: 50 ppm by weight

(Plating conditions)

pH: 1 or less
Bath temperature: 45°C
Current density: 5 A/dm$^2$

<Example 2>

A steel sheet having a nickel layer and a tin layer was obtained as in Example 1, and the resulting steel sheet having a nickel layer and a tin layer was subjected to a room-temperature diffusion treatment at a temperature of 25°C for a duration of 180 days to afford a surface-treated metal sheet for batteries 10a having a nickel-tin alloy layer 50. The treatments in the nickel plating and the tin plating were continued such that the deposited amount of nickel and the deposited amount of tin were the amounts shown in Table 1. Then, each of the above-described measurements was performed on the thus obtained surface-treated metal sheet for batteries 10a. The results are shown in Table 1.

<Examples 3 to 5>

Surface-treated metal sheets for batteries 10a were obtained as in Example 2 except that the period of the room-temperature diffusion treatments were as shown in Table 1. The treatments in the nickel plating and the tin plating were continued such that the deposited amount of nickel and the deposited amount of tin were the amounts shown in Table 1. Then, each of the above-described measurements was performed on the thus obtained surface-treated metal sheet for batteries 10a. The results are shown in Table 1.

<Example 6>

A surface-treated metal sheet for batteries 10a was obtained as in Example 2 except that the thickness of the metal base material 20 was 25 $\mu$m and the period of the room-temperature diffusion treatment was as shown in Table 1. The treatments in the nickel plating and the tin plating were continued such that the deposited amount of nickel and the deposited amount of tin were the amounts shown in Table 1. Then, each of the above-described measurements was performed on the thus obtained surface-treated metal sheet for batteries 10a. The results are shown in Table 1.

<Examples 7 and 8>

Surface-treated metal sheets for batteries 10a were obtained as in Example 2 except that the current densities in the tin plating and the periods of the room-temperature diffusion treatments were as shown in Table 1. The treatments in the nickel plating and the tin plating were continued such that the deposited amount of nickel and the deposited amount of tin were the amounts shown in Table 1. Then, each of the above-described measurements was performed on the thus obtained surface-treated metal sheet for batteries 10a. The results are shown in Table 1.

<Examples 9 and 10>

Surface-treated metal sheets for batteries 10a were obtained as in Example 2 except that the current densities in the nickel plating and the tin plating and the periods of the room-temperature diffusion treatments were as shown in Table 1. The treatments in the nickel plating and the tin plating were continued such that the deposited amount of nickel and the deposited amount of tin were the amounts shown in Table 1. Then, each of the above-described measurements was performed on the thus obtained surface-treated metal sheet for batteries 10a. The results are shown in Table 1.

<Examples 11 and 12>

Surface-treated metal sheets for batteries 10a were obtained as in Example 2 except that the current densities in the nickel plating and the tin plating, the amounts of the additive in the tin-plating baths, and the periods of the room-temperature diffusion treatments were as shown in Table 1. The treatments in the nickel plating and the tin plating were continued such that the deposited amount of nickel and the deposited amount of tin were the amounts shown in Table 1. Then, each of the above-described measurements was performed on the thus obtained surface-treated metal sheet for batteries 10a. The results are shown in Table 1.

<Example 13>

A surface-treated metal sheet for batteries 10a was obtained as in Example 7 except that the thickness of the metal base material 20 was 110 μm. The treatments in the nickel plating and the tin plating were continued such that the deposited amount of nickel and the deposited amount of tin were the amounts shown in Table 1. Then, each of the above-described measurements was performed on the thus obtained surface-treated metal sheet for batteries 10a. The results are shown in Table 1.

<Comparative Examples 1 and 2>

Surface-treated metal sheets were obtained as in Example 2 except that neither the additive nor nickel was added to the tin-plating bath, and the current densities in the tin plating and the periods of the room-temperature diffusion treatments were as shown in Table 1. The treatments in the nickel plating and the tin plating were continued such that the deposited amount of nickel and the deposited amount of tin were the amounts shown in Table 1. The results are shown in Table 1.

<Comparative Example 3>

A surface-treated metal sheet was obtained as in Comparative Example 1 except that the room-temperature diffusion treatment was not conducted. The treatments in the nickel plating and the tin plating were continued such that the deposited amount of nickel and the deposited amount of tin were the amounts shown in Table 1. The results are shown in Table 1.

<Comparative Example 4>

A surface-treated metal sheet was obtained as in Comparative Example 3 except that 50 ppm by weight of nickel was added to the tin-plating bath. The treatments in the nickel plating and the tin plating were continued such that the deposited amount of nickel and the deposited amount of tin were the amounts shown in Table 1. The results are shown in Table 1.

<Comparative Example 5>

A surface-treated metal sheet was obtained as in Example 2 except that nickel was not added to the tin-plating bath, and the amount of the additive in the tin-plating bath and the period of the room-temperature diffusion treatment were as shown in Table 1. The treatments in the nickel plating and the tin plating were continued such that the deposited amount of nickel and the deposited amount of tin were the amounts shown in Table 1. The results are shown in Table 1.

<Comparative Example 6>

A surface-treated metal sheet was obtained as in Example 4 except that the deposited amount of tin was as shown in Table 1. The treatments in the nickel plating and the tin plating were continued such that the deposited amount of nickel and the deposited amount of tin were the amounts shown in Table 1. The results are shown in Table 1.

[Table 1]

Table 1

| | Production conditions | | | | | | Deposited amount on metal base material (XRF) | | | | Index of crystal orientation in tin layer | | Presence or absence of nickel-tin alloy | Results of electrochemical measurement (corrosion current density) | | | |
| | Metal base material | Nickel plating | Tin plating | | | Room-temperature diffusion | Nickel | | Tin | | | | | Before anode reaction | | After anode reaction | |
| | Thickness [μm] | Current density [A/dm²] | Amount of additive added [mL/L] | Amount of Ni added [ppm by weight] | Current density [A/dm²] | Duration of treatment [days] | [g/m²] | [μm] | [g/m²] | [μm] | MI(220)/MI(200) | MI(220)/MI(400) | 2θ=42~43° | [mA/cm²] | Evaluation of gas generation suppression | [mA/cm²] | Evaluation of gas generation suppression |
|---|---|---|---|---|---|---|---|---|---|---|---|---|---|---|---|---|---|
| Example 1 | 60 | 10.0 | 50 | 50 | 5.0 | - | 4.61 | 0.52 | 8.81 | 1.20 | 15.0 | 16.7 | × | 0.11 | A+ | - | - |
| Example 2 | 60 | 10.0 | 50 | 50 | 5.0 | 180 | 1.64 | 0.18 | 13.98 | 1.90 | 36.6 | 42.3 | ○ | 0.09 | A+ | 9 | A+ |
| Example 3 | 60 | 10.0 | 50 | 50 | 5.0 | 7 | 1.79 | 0.20 | 7.39 | 1.00 | 12.6 | 15.3 | ○ | 0.11 | A+ | 18 | A+ |
| Example 4 | 60 | 10.0 | 50 | 50 | 5.0 | 8 | 4.50 | 0.51 | 7.45 | 1.01 | 16.3 | 14.2 | ○ | 0.12 | A+ | 15 | A+ |
| Example 5 | 60 | 10.0 | 50 | 50 | 5.0 | 7 | 9.20 | 1.03 | 7.39 | 1.00 | 25.4 | 20.4 | ○ | 0.11 | A+ | 10 | A+ |
| Example 6 | 25 | 10.0 | 50 | 50 | 5.0 | 22 | 4.35 | 0.49 | 7.10 | 0.97 | 38.6 | 61.2 | ○ | 0.11 | A+ | 13 | A+ |
| Example 7 | 60 | 10.0 | 50 | 50 | 20.0 | 5 | 4.60 | 0.52 | 7.35 | 1.00 | 6.6 | 8.3 | ○ | 0.16 | A | 22 | A |
| Example 8 | 60 | 10.0 | 50 | 50 | 30.0 | 30 | 4.60 | 0.52 | 7.17 | 0.97 | 9.1 | 6.2 | ○ | 0.16 | A | 25 | A |
| Example 9 | 60 | 3.6 | 50 | 50 | 3.7 | 150 | 4.68 | 0.53 | 5.20 | 0.71 | 2.4 | 4.3 | ○ | 0.18 | A | 22 | A |
| Example 10 | 60 | 4.9 | 50 | 50 | 1.6 | 150 | 7.26 | 0.82 | 4.27 | 0.58 | 3.4 | 8.3 | ○ | 0.17 | A | 23 | A |
| Example 11 | 60 | 11.7 | 10 | 50 | 3.9 | 30 | 6.87 | 0.77 | 2.43 | 0.33 | 1.5 | 3.4 | ○ | 0.21 | B | 35 | B |

(continued)

| | Production conditions | | | | | | Deposited amount on metal base material (XRF) | | | | Index of crystal orientation in tin layer | | Presence or absence of nickel-tin alloy | Results of electrochemical measurement (corrosion current density) | | | |
| | Metal base material | Nickel plating | Tin plating | | | Room-temperature diffusion | Nickel | | Tin | | | | | Before anode reaction | | After anode reaction | |
| | Thickness [μm] | Current density [A/dm²] | Amount of additive added [mL/L] | Amount of Ni added [ppm by weight] | Current density [A/dm²] | Duration of treatment [days] | [g/m²] | [μm] | [g/m²] | [μm] | MI(220)/MI(200) | MI(220)/MI(400) | 2θ=42~43° | [mA/cm²] | Evaluation of gas generation suppression | [mA/cm²] | Evaluation of gas generation suppression |
|---|---|---|---|---|---|---|---|---|---|---|---|---|---|---|---|---|---|
| Example 12 | 60 | 11.7 | 25 | 50 | 3.9 | 30 | 6.87 | 0.77 | 2.51 | 0.34 | 1.8 | 5.1 | ○ | 0.23 | B | 32 | B |
| Example 13 | 110 | 10.0 | 50 | 50 | 20.0 | 5 | 4.60 | 0.52 | 2.17 | 0.30 | 1.2 | 0.6 | ○ | 0.23 | B | 34 | B |
| Comp. Ex. 1 | 60 | 10.0 | 0 | 0 | 1.0 | 120 | 2.71 | 0.30 | 13.98 | 1.90 | 0.4 | 0.4 | × | 0.27 | C | 48 | C |
| Comp. Ex. 2 | 60 | 10.0 | 0 | 0 | 1.0 | 120 | 3.41 | 0.38 | 7.27 | 0.99 | 0.4 | 0.7 | × | 0.32 | C | 64 | C |
| Comp. Ex. 3 | 60 | 10.0 | 0 | 0 | 1.0 | - | 4.21 | 0.47 | 3.67 | 0.50 | 0.1 | 0.1 | × | 0.34 | C | 62 | C |
| Comp. Ex. 4 | 60 | 10.0 | 0 | 50 | 1.0 | - | 4.21 | 0.47 | 2.26 | 0.31 | 0.0 | 0.1 | × | 0.48 | C | 69 | C |
| Comp. Ex. 5 | 60 | 10.0 | 10 | 0 | 5.0 | 5 | 4.48 | 0.50 | 1.90 | 0.26 | 0.1 | 0.2 | × | 0.46 | C | 48 | C |
| Comp. Ex. 6 | 60 | 10.0 | 50 | 50 | 5.0 | 8 | 4.50 | 0.51 | 0.13 | 0.02 | - | - | × | 0.48 | C | 56 | C |

As shown in Table 1, the surface-treated metal sheets 10 and 10a in which the indices of crystal orientations in the (200) plane, the (220) plane, and the (400) plane in the tin layer 40 have relations such that at least one of the result of Formula (1) and that of Formula (2) exceeds 1 can decrease the corrosion current density and can effectively suppress gas generation before and after the anode reaction (Examples 1 to 13).

More specifically, in Examples 1 to 13, when at least one of the result of Formula (1) and that of Formula (2) relating to the indices of crystal orientations in the tin layer 40 exceeded 1, the corrosion current density before the anode reaction was 0.25 mA/cm$^2$ or less, and an excellent gas generation-suppressing effect was confirmed. In addition, in Examples 1 to 10, both of the result of Formula (1) and that of Formula (2) were 2 or more, and a more excellent gas generation-suppressing effect was confirmed. Furthermore, in Examples 1 to 6, both of the result of Formula (1) and that of Formula (2) were 10 or more, and a more remarkable gas generation-suppressing effect was confirmed.

In Examples 2 to 13, a nickel-tin alloy layer 50 was further provided between the nickel layer 30 and the tin layer 40. As shown in Table 1, the results of corrosion current density after the anode reaction show that a gas generation-suppressing effect and an excellent electrolyte resistance even after the anode reaction were demonstrated by virtue of the nickel-tin alloy layer 50.

More specifically, in Examples 2 to 13, the surface-treated metal sheets for batteries 10a primarily contained Ni-Sn$_{42-43}$ as an alloy phase contained in the nickel-tin alloy layer 50. The surface-treated metal sheets for batteries 10a had a corrosion current density of 40 mA/cm$^2$ or less after the anode reaction, and it was confirmed that the surface-treated metal sheets for batteries 10a had a gas generation-suppressing effect and was also excellent in electrolyte resistance.

In the formation of the nickel-tin alloy layer 50, when the indices of crystal orientations in the tin layer 40 formed as an overlay on the nickel layer 30 were controlled such that both of the result of Formula (1) and that of Formula (2) were 2 or more, a more excellent gas generation-suppressing effect in the nickel-tin alloy layer 50 was confirmed. In particular, with respect to the indices of crystal orientations in the tin layer 40, when both of the result of Formula (1) and that of Formula (2) were 10 or more, the corrosion current density after the anode reaction was 20 mA/cm$^2$ or less, and a remarkable gas generation-suppressing effect was confirmed.

On the other hand, in Comparative Examples 1 to 6, none of the result of Formula (1) and that of Formula (2) relating to the indices of crystal orientations in the tin layer 40 exceeded 1, and it was confirmed that the corrosion current densities before and after the anode reaction were larger than those in Examples 1 to 13.

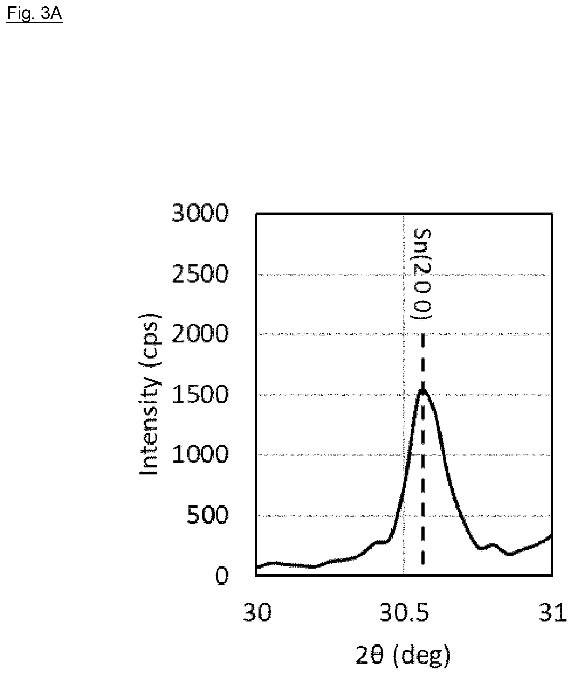

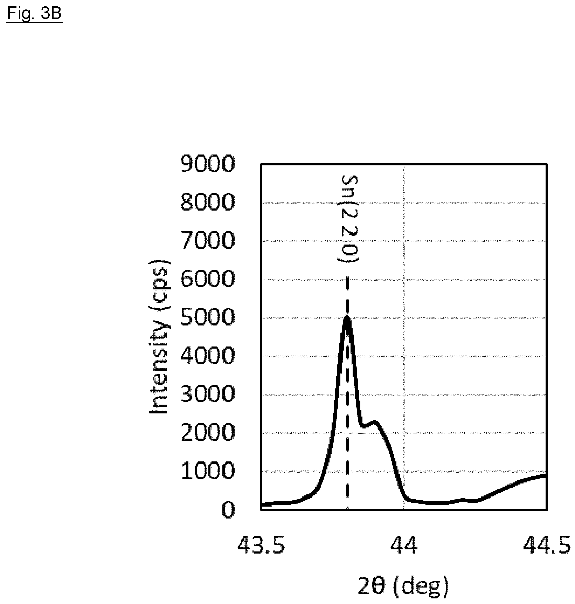

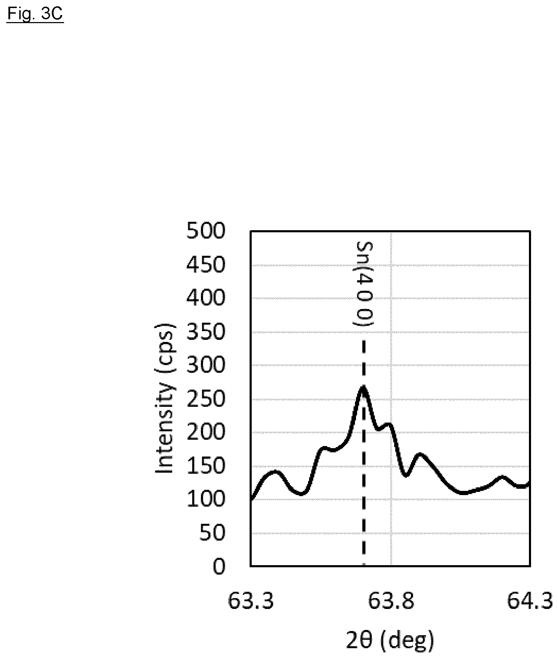

Figs. 3A to 3C are X-ray diffraction (XRD) charts obtained by X-ray diffraction (XRD) measurement performed on the tin layer 40 in the surface-treated metal sheet for batteries 10a according to Example 9. Fig. 3A is an X-ray diffraction chart showing a diffraction peak in the (200) plane in the tin layer 40, Fig. 3B is an X-ray diffraction chart showing a diffraction peak in the (220) plane in the tin layer 40, and Fig. 3C is an X-ray diffraction chart showing a diffraction peak in the (400) plane in the tin layer 40. The ratios of indices of crystal orientations in the tin layer 40 were calculated using these observed diffraction peaks in the (200) plane, the (220) plane, and the (400) plane in the tin layer 40. Similarly, in the surface-treated metal sheets for batteries 10 and 10a obtained in Examples 1 to 8 and 10 to 13, the ratios of indices of crystal orientations in the tin layer 40 were calculated using the diffraction peaks in the (200) plane, the (220) plane, and the (400) plane in the tin layer 40.

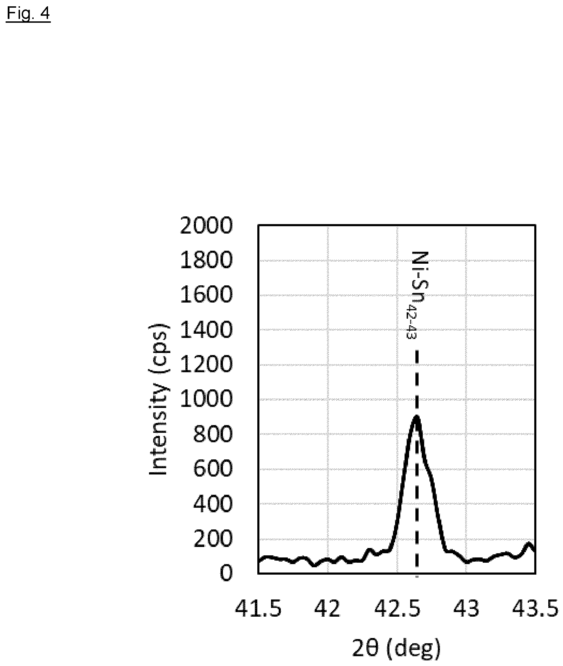

Fig. 4 is an X-ray diffraction chart of an alloy phase contained in the nickel-tin alloy layer obtained in Example 9. As shown in Fig. 4, in the surface-treated metal sheet for batteries 10a obtained in Example 9, a diffraction peak was found in the region of diffraction angle 2θ = 42 to 43° by X-ray diffraction measurement, and it was confirmed that a nickel-tin alloy layer 50 was formed. Similarly, in the surface-treated metal sheets for batteries 10a obtained in Examples 2 to 8 and 10 to 13, a diffraction peak was found in the region of diffraction angle 2θ = 42 to 43°.

REFERENCE SIGNS LIST

    10, 10a: surface-treated metal sheet for batteries
    20: metal base material
    30: nickel layer
    40: tin layer
    50: nickel-tin alloy layer

**Claims**

**1.** A surface-treated metal sheet for batteries, comprising:

        a metal base material;

a nickel layer formed on at least one side of the metal base material; and
a tin layer formed as an overlay on the nickel layer,
wherein with respect to the tin layer, at least one of the result of Formula (1) below and that of Formula (2) below exceeds 1:

$$N(220)/N(200) \quad (1)$$

$$N(220)/N(400) \quad (2)$$

where in Formulae (1) and (2), N(220) represents an index of crystal orientation in a (220) plane in the tin layer, in Formula (1), N(200) represents an index of crystal orientation in a (200) plane in the tin layer, and in Formula (2), N(400) represents an index of crystal orientation in a (400) plane in the tin layer.

2. The surface-treated metal sheet for batteries according to claim 1, further comprising a nickel-tin alloy layer formed between the nickel layer and the tin layer.

3. The surface-treated metal sheet for batteries according to claim 1 or 2, wherein the metal base material is an iron-based metal base material.

4. The surface-treated metal sheet for batteries according to any one of claims 1 to 3, wherein the deposited amount of nickel in the nickel layer is more than 1.0 $g/m^2$ and 20.0 $g/m^2$ or less.

5. The surface-treated metal sheet for batteries according to any one of claims 1 to 4, wherein the deposited amount of tin in the tin layer is 1.0 $g/m^2$ or more and 15.0 $g/m^2$ or less.

6. The surface-treated metal sheet for batteries according to any one of claims 1 to 5, wherein at least one of the result of Formula (1) and that of Formula (2) is 2 or more.

7. The surface-treated metal sheet for batteries according to claim 2, wherein the nickel-tin alloy layer contains an alloy phase that gives a diffraction peak in the region of diffraction angle $2\theta = 42$ to $43°$ as measured by X-ray diffraction measurement using $CuK\alpha$ as an X-ray source.

Fig. 1

Fig. 2

Fig. 3A

Fig. 3B

Fig. 3C

Fig. 4

# INTERNATIONAL SEARCH REPORT

| International application No. |
| --- |
| **PCT/JP2023/034962** |

| A. CLASSIFICATION OF SUBJECT MATTER |
| --- |
| ***H01M 4/66***(2006.01)i; ***H01M 4/06***(2006.01)i<br>FI:   H01M4/66 A; H01M4/06 T |
| According to International Patent Classification (IPC) or to both national classification and IPC |

| B. FIELDS SEARCHED |
| --- |
| Minimum documentation searched (classification system followed by classification symbols)<br>    H01M4/66; H01M4/06 |
| Documentation searched other than minimum documentation to the extent that such documents are included in the fields searched<br>    Published examined utility model applications of Japan 1922-1996<br>    Published unexamined utility model applications of Japan 1971-2023<br>    Registered utility model specifications of Japan 1996-2023<br>    Published registered utility model applications of Japan 1994-2023 |
| Electronic data base consulted during the international search (name of data base and, where practicable, search terms used) |

| C. DOCUMENTS CONSIDERED TO BE RELEVANT | | |
| --- | --- | --- |
| Category* | Citation of document, with indication, where appropriate, of the relevant passages | Relevant to claim No. |
| A | JP 2006-351432 A (TOYO KOHAN CO LTD) 28 December 2006 (2006-12-28)<br>    paragraphs [0008]-[0011] | 1-7 |
| A | JP 2743416 B2 (YUASA BATTERY CO LTD) 22 April 1998 (1998-04-22)<br>    column 3, line 40 to column 4, line 13 | 1-7 |
| A | JP 2000-48799 A (MATSUSHITA ELECTRIC IND CO LTD) 18 February 2000<br>(2000-02-18)<br>    paragraphs [0011]-[0012] | 1-7 |
| A | JP 64-59769 A (ALKALI DRY BATTERY ENG LAB) 07 March 1989 (1989-03-07)<br>    p. 4, upper left column, line 5 to lower left column, line 13 | 1-7 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **12 December 2023** | **26 December 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

| International application No. |
| --- |
| **PCT/JP2023/034962** |

| Patent document cited in search report | | | Publication date (day/month/year) | Patent family member(s) | | | Publication date (day/month/year) |
| --- | --- | --- | --- | --- | --- | --- | --- |
| JP | 2006-351432 | A | 28 December 2006 | (Family: none) | | | |
| JP | 2743416 | B2 | 22 April 1998 | JP | 3-15156 | A | |
| JP | 2000-48799 | A | 18 February 2000 | (Family: none) | | | |
| JP | 64-59769 | A | 07 March 1989 | (Family: none) | | | |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H275160 A

**Non-patent literature cited in the description**

- **K. S. WILLSON** ; **J. A. ROGERS**. *Tech. Proceeding Amer. Electroplaters Soc.*, 1964, vol. 51, 92